Europäisches Patentamt

European Patent Office

Office européen des brevets

(19)

(11) Numéro de publication: **0 125 935**
**B1**

(12) # FASCICULE DE BREVET EUROPÉEN

(45) Date de publication du fascicule du brevet:
**20.05.87**

(21) Numéro de dépôt: **84400469.7**

(22) Date de dépôt: **09.03.84**

(51) Int. Cl.⁴: **F 02 C 7/20,** F 01 D 5/06,
F 02 C 7/00, G 01 M 1/00

(54) **Appareillage pour le transfert d'un module de turbine complet d'une machine d'équilibrage à un moteur et vice versa, et procédé pour la mise en oeuvre dudit appareillage.**

(30) Priorité: **15.04.83 FR 8306157**

(43) Date de publication de la demande:
**21.11.84 Bulletin 84/47**

(45) Mention de la délivrance du brevet:
**20.05.87 Bulletin 87/21**

(84) Etats contractants désignés:
**DE FR GB**

(56) Documents cité:
**FR-A-2 211 589**
**FR-A-2 211 591**
**FR-A-2 262 197**
**GB-A-645 994**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bouiller, Jean Georges, 10, rue Kleber, F-91800 Brunoy (FR)**
Inventeur: **Delonge, Jean- Claude Lucien, 13, rue Pasteur, F-91100 Corbeil Essonnes (FR)**

(74) Mandataire: **Moinat, François, S.N.E.C.M.A. Service des Brevets Boîte Postale 81, F-91003 Evry Cedex (FR)**

LIBER, STOCKHOLM 1987

EP 0 125 935 B1

## Description

L'invention concerne la combinaison d'un appareillage et d'un module de turbine complet permettant le transfert dudit module de turbine d'une machine d'équilibrage à un moteur et vice versa, le rotor de turbine étant fixé à l'arbre de transmission par des tirants répartis circonférentiellement; l'invention concerne également un procédé pour la mise en oeuvre de ladite combinaison.

Les motoristes construisant des moteurs à turbine, plus particulièrement destinés aux avions, ont cherché à simplifier les opérations de maintenance de manière qu'elles puissent être effectuées même dans des ateliers sommairement équipés. Une solution a consisté à modulariser les sous-ensembles les plus importants de manière à permettre leur remplacement aisé. Toutefois, la modularisation de l'étage de turbine n'a pas résolu totalement le problème. En effet les vitesses élevées auxquelles sont soumis les aubages rotoriques imposent un équilibrage très précis, équilibrage qui ne doit pas être remis en cause lors du remontage de la turbine sur les autres sous-ensembles du moteur. La solution actuelle consiste à équilibrer le rotor seul sur une machine d'équilibrage, puis à remonter le rotor sur le moteur, les étages statoriques étant mis en place après l'accouplement du rotor à l'arbre moteur. Une méthode semblable est décrite dans le brevet US-A-3 916 495 pour la mise en place d'un rotor de turbine constitué de deux disques reliés entre eux et à l'arbre de transmission du moteur par des tirants répartis circonférentiellement. Le couple de rotation est transmis entre chaque disque et entre un disque et l'arbre par des couronnes d'entraînement à dents coniques. Le rotor est équilibré sur une machine dont l'arbre a les mêmes caractéristiques que celui du moteur et dont la couronne d'entraînement est identique. L'équilibrage est réalisé de manière connue et est réglé par l'adjonction de masses, se présentant sous forme de rondelles, bloquées sous les écrous des tirants.

Après équilibrage, le rotor est démonté de la machine et peut être remonté sur un moteur sans nécessiter de rééquilibrage si les positions relatives des masses d'équilibrage sont conservés.

L'équilibrage du rotor indépendamment des autres parties du moteur constitue une simplification appréciable, car il permet aux ateliers ne possédant pas de machine d'équilibrage, d'assurer quand même l'entretien des moteurs. Toutefois, le montage, après assemblage du rotor sur son arbre, des aubages statoriques peut être la cause d'un endommagement des labyrinthes par suite des jeux extrêmement faibles et provoquer une perte d'efficacité non négligeable.

L'invention a pour objet la combinaison d'un appareillage et d'un module de turbine ayant pour but l'équilibrage du rotor de turbine dans son stator. L'ensemble constituant le module de turbine peut aisément être accouplé à un arbre tout en évitant un déséquilibrage du rotor et/ou un endommagement des labyrinthes. Ces résultats sont obtenus grâce à des dispositifs de maintien et de transport permettant la sauvegarde de l'équilibrage et le guidage du module pendant son montage sur le moteur.

La combinaison d'un appareillage et d'un module de turbine selon l'invention est remarquable en ce qu'elle comprend:
- un dispositif de maintien du carter extérieur du distributeur et de l'étage statorique sur la machine d'équilibrage lors de l'équilibrage du rotor de turbine;
- des moyens de solidarisation provisoire des disques de turbine entre eux;
- un dispositif de transport assurant la solidarisation des disques de turbine après le retrait de la machine d'équilibrage.

Les explications et figures données ci-après à titre d'exemple, permettront de comprendre comment l'invention peut être réalisée.

La figure 1 représente une portion de la partie avant d'un rotor de turbine classique.

La figure 2 est une vue de la portion montrée à la figure 1 présentant un rotor modifié selon une particularité de l'invention.

La figure 3 est une demi-vue en coupe d'un module de turbine monté sur la machine d'équilibrage par un dispositif de maintien conforme à l'invention.

Les figures 4, 5 et 6 montrent différentes étapes du démontage du dispositif de maintien et du montage du dispositif de transport.

La figure 7 montre la phase de fixation du module de turbine sur le module de chambre de combustion.

La figure 8 est une demi-vue en coupe du module turbine monté sur le module de chambre.

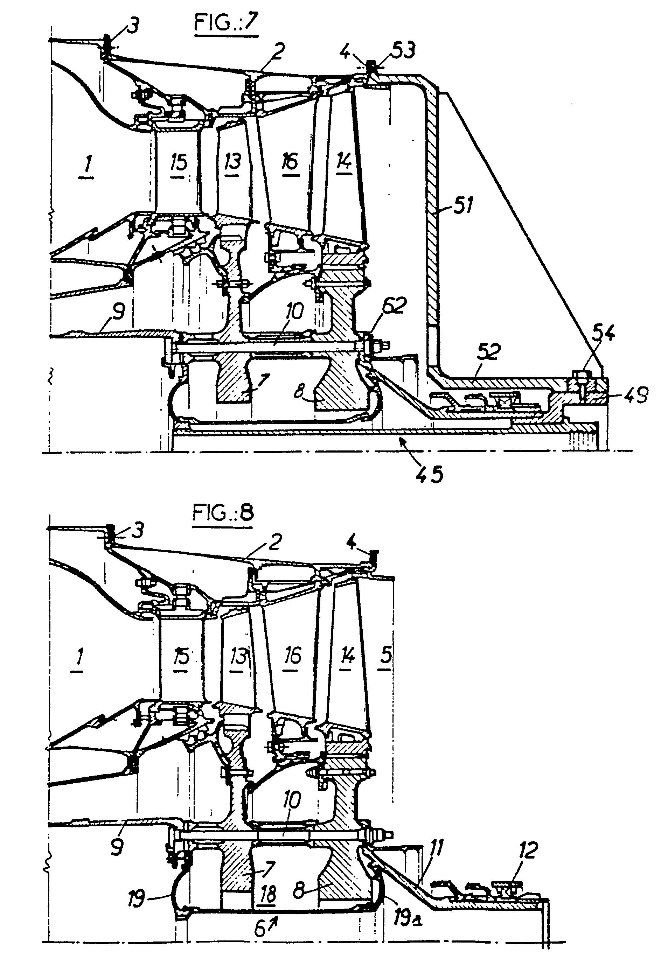

La construction modulaire de certaines parties importantes d'un moteur d'avion à turbine permet de remédier d'une manière simple et rapide au défaut d'un organe ou d'un ensemble par changement du module défectueux par un autre module neuf ou révisé. Cette méthode est particulièrement appréciable dans le cas de la turbine haute-pression dont les éléments sont ajustés et équilibrés avec précision. La figure 8 montre un module de turbine haute-pression monté sur le moteur et plus précisément à l'arrière de la section ou du module des chambres de combustion 1. Dans l'exemple représenté, le module de turbine est limité par un carter extérieur 2 du distributeur, muni de brides avant 3 et arrière 4 pour sa fixation, à l'avant, à la section des chambres de combustion 1 et, à l'arrière, à la tuyère 5. Les aubages fixes et mobiles constituant la turbine haute-pression sont compris entre ces deux carters. Le rotor est constitue par deux disques 7 et 8 portant respectivement les aubes rotoriques 13 et 14. Les deux disques sont maintenus entre eux et fixés à l'arbre de transmission 9 qui commande le compresseur haute-pression, par des tirants 10 répartis circonférentiellement. Dans le type de montage représenté, les tirants assurent outre la fonction de fixation, celle de transmission du mouvement de rotation.

Le rotor est maintenu à l'arrière par un tourillon 11 qui coopère avec le palier 12 du support arrière d'arbre. Les aubes rotoriques 13 et 14 reçoivent le flux de gaz de combustion respectivement par une couronne d'aubes statoriques réglables 15 prévue dans le module des chambres de combustion et par une couronne d'aubes statoriques fixes 18 montée sur le carter extérieur du module turbine.

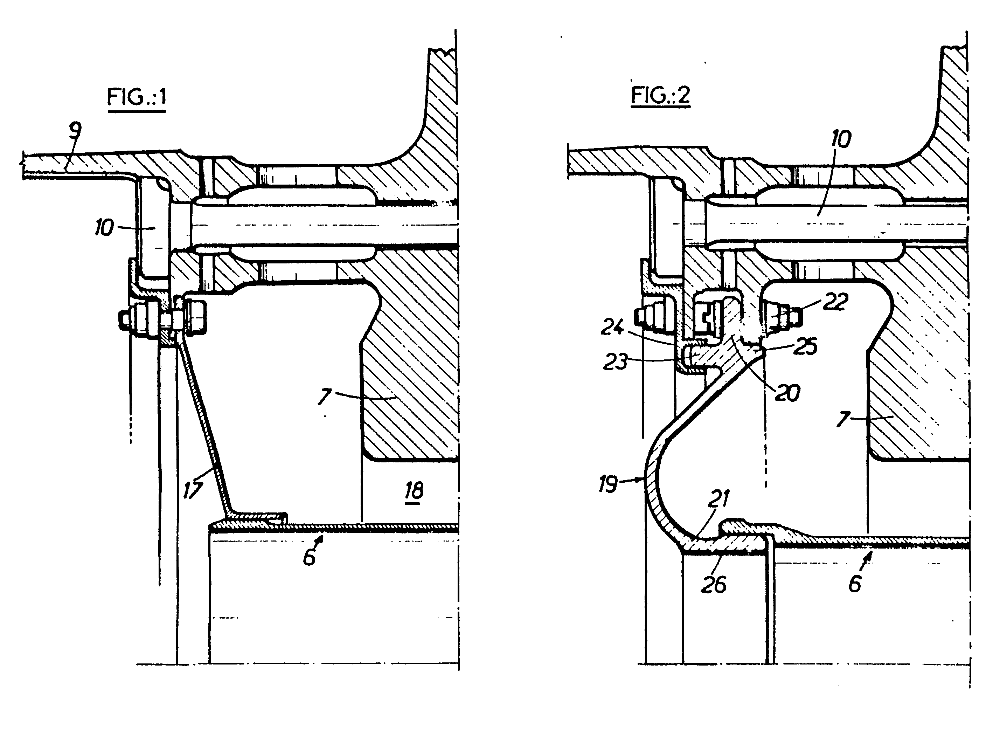

Classiquement, la périphérie extérieure d'un tube intérieur 6, avec ses deux anneaux avant 19 et arrière 19a, délimite un volume 18 entourant les disques dans lequel circule de l'air de refroidissement. La figure 1 montre à plus grande échelle une portion de la partie intérieure avant d'un rotor de turbine classique. La partie avant 17, ainsi que la partie arrière, sont constituées d'anneaux coniques qui maintiennent la paroi cylindrique centrale et permettent la fixation du tube intérieur 6 de manière etanche à l'avant de l'arbre du rotor et à l'arrière sur le tourillon 11. Les efforts mécaniques que supportent ces anneaux sont très limités et le tube intérieur 6 tel que conçu ne peut constituer une liaison mécanique entre l'arbre moteur et le tourillon, et maintenir de façon efficace les disques 7 et 8. Une particularité de l'invention consiste en la réalisation de moyens de solidarisation provisoire entre la surface interne du tube intérieur 6 et le tourillon 11. Pour ce faire, l'anneau conique avant 17 est remplacé (figure 2) par un anneau 19 fixé sur le disque 7 présentant une meilleure rigidité mécanique et dont le bord intérieur 21 constituant une partie de la surface interne du tube intérieur 6 porte un filetage 26 susceptible de coopérer avec le filetage d'une vis de préfixation qui sera ultérieurement décrite. L'anneau 19 est convexe et sa convexité est dirigée vers l'avant. Vus en coupe, les bords extérieur 20 et intérieur 21 sont perpendiculaires entre eux, le bord 20 étant dans un plan radial du module porte è sa périphérie des trous pour le passage des boulons de fixation 22 sur le disque 7. Il est également prévu, concentriquement au bord et è l'intérieur de la rangée de trous, une première nervure 23, perpendiculaire à une face du bord 20 et dirigée dans le même sens que la convexité de l'anneau 19, permettant entre autre le positionnement des cavaliers 24 de maintien des tirants 10 et une deuxième nervure 25, perpendiculaire à l'autre face du bord 20 dirigée en sens inverse, permettant le positionnement du tube intérieur 6 par rapport au disque 7.

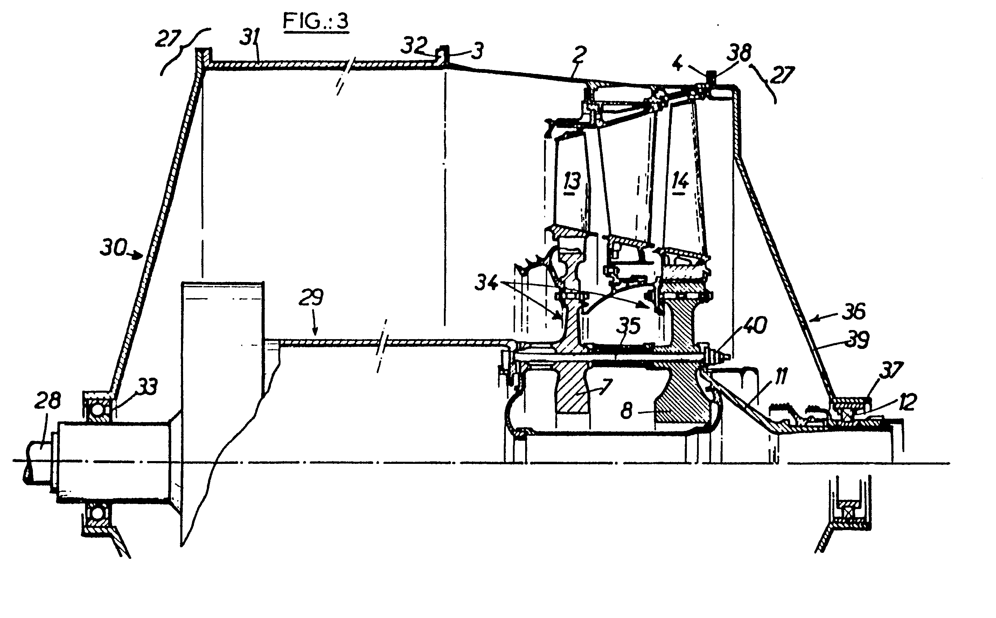

La figure 3 est une vue partielle et en coupe du module de turbine complet, c'est-à-dire le rotor en place dans le stator, monté dans le dispositif de maintien 27, constituant une partie de l'appareillage selon l'invention. L'arbre de sortie 28 de la machine d'équilibrage est accouplé par cardan à l'arbre omnibus 29 dont la masse est équivalente à celle du rotor du compresseur haute-pression du moteur. La partie avant 30 du dispositif de maintien 27, formant carter et constitué d'une paroi cylindrique 31 fermée par un fond conique, porte dans son axe un palier 33 fixé sur l'arbre omnibus 29. Le bord de la paroi cylindrique 31 porte une bride 32 pour la fixation de la bride 3 du carter de distributeur 2 du module turbine. Le rotor de turbine 34, formé des disques 7 et 8 et des aubages 13, 14, est fixé à l'extrémité de l'arbre 29 par des tirants 35 identiques à ceux 10 servant à la liaison de la turbine à l'arbre de transmission 9 (figure 8). On ferme l'arrière du module par la partie arrière 36 du dispositif de maintien 27. Cette partie se présente sous forme d'un fond conique muni d'une partie cylindrique 37 coaxiale susceptible de coopérer avec le palier 12 resté sur le tourillon 11 du module. Le bord extérieur du fond est muni d'une bride 38 comportant des moyens de fixation à la bride arrière 4 du module. Le fond 36 présente en face des tirants 35 des ouvertures 39 donnant accès aux boulons 40 de fixation des tirants 35.

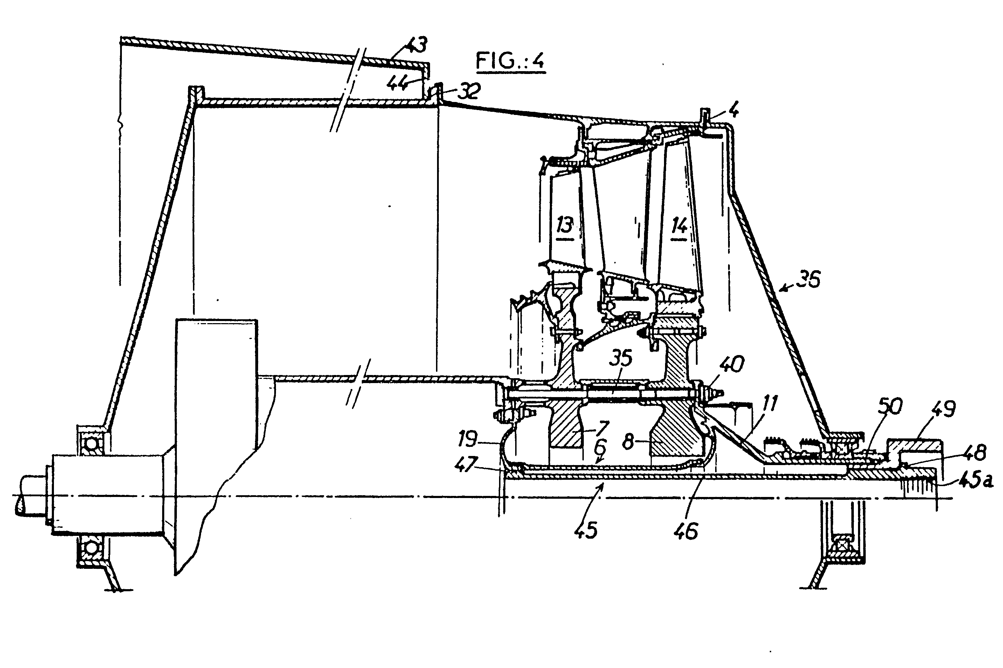

Lorsque l'équilibrage a été effectué, l'ensemble est retiré de la machine d'équilibrage (figure 4) puis déposé en position verticale dans un bâti de démontage 43 comportant des moyens 44 coopérant avec la bride 32 du dispositif de maintien. On prépare alors le module de turbine au transport en effectuant les opérations ci-après décrites.

On introduit dans l'axe du tourillon 11, à la partie arrière du dispositif de maintien, une vis de maintien 45 constituée d'un corps tubulaire 46 dont l'extrémité avant porte sur sa surface extérieure un filetage 47 susceptible de coopérer avec le filetage 26 de l'anneau 19 et le tube intérieur 6 (figure 2). L'autre extrémité de la vis de maintien 45 présente une tête formée d'une collerette de butée 48 contre laquelle vient appuyer une bague de centrage 49. Cette bague coopère au moins en partie avec la portée interne 50 du tourillon 11 et forme butée pour l'extrémité du tourillon. On visse la vis de maintien 45 de manière à la bloquer contre l'extrémité du tourillon. Les disques de rotor 7 et 8 sont alors bloqués entre l'anneau 19 du tube intérieur 6 et le tourillon et on peut procéder au démontage des écrous 40 des tirants 35 qui solidarisaient les disques de turbine, les deux disques restant solidaires l'un de l'autre par l'effort axial introduit par la vis de maintien 45.

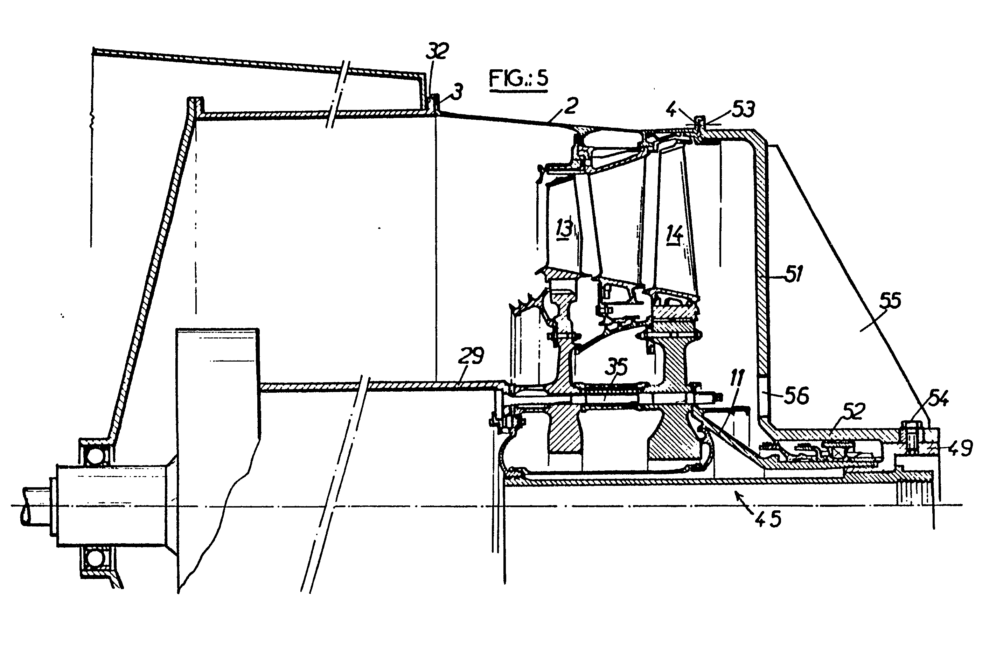

On démonte les fixations maintenant la partie arrière 36 du dispositif de maintien sur la bride 4 du module de turbine. On retire cette partie et on la remplace (figure 5) par la partie arrière 51 d'un dispositif de transport que l'on fixe à la bride 4 et sur la bague de centrage 49 de la vis de maintien 45. La partie arrière 51 du dispositif de transport forme un carter recouvrant la partie arrière du module de turbine et est constitué, dans l'exemple de réalisation, d'une flasque circulaire à rebord comportant une ouverture centrale à laquelle est fixée une cheminée 52 coaxiale dirigée en sens inverse du rebord. Le rebord porte une bride 53 susceptible d'être fixée par des moyens de fixation à la bride 4 du carter extérieur du module de turbine. La cheminée 52 a des dimensions telles qu'elle puisse se placer sur la partie arrière du tourillon 11 et se fixer par des boulons 54 sur la bague de centrage 49. Des renforts 55 sont prévus entre la flasque et la cheminée. Des ouvertures 56 dans la flasque 51 permettent d'accéder aux filetages des tirants.

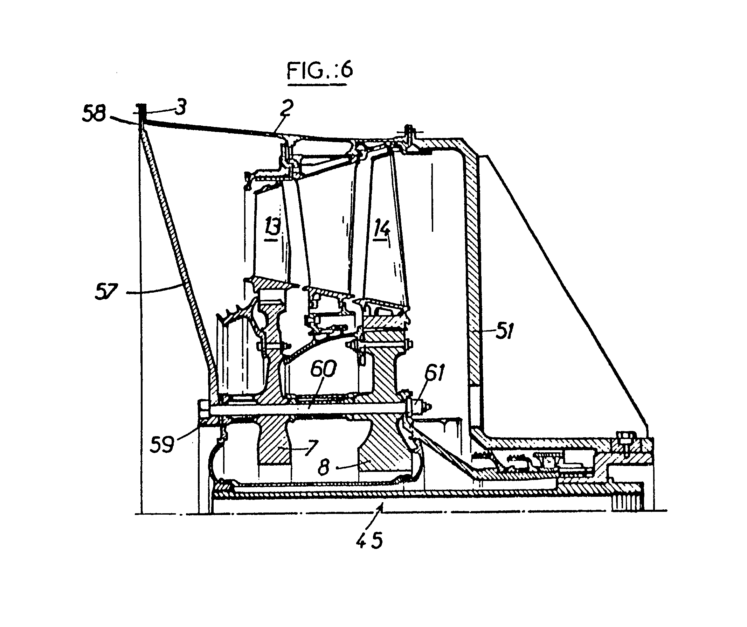

Lorsque la partie arrière du dispositif de transport est fixée au carter 2 et à la bague de centrage 49 de la vis de maintien, on supprime la liaison entre les brides 32 et 3 du dispositif de fixation du carter 2 et, par exemple par un anneau de levage fixé dans un taraudage 45a, à l'extrémité arrière de la vis de maintien 45, on soulève le module de turbine de manière è dégager le rotor des tirants 35 qui restent accrochés à l'extrémité de l'arbre omnibus 29. On ferme alors l'avant du module de turbine par la partie avant 57 du dispositif de transport qui se présente (figure 6) sous forme d'un fond annulaire tronconique dont le bord extérieur 58 se fixe sous la bride 3 du carter, et le bord intérieur 59 sur le rotor de turbine par des tirants de transport 60 maintenant les disques par serrage des boulons 61.

Les disques 7 et 8 sont ainsi maintenus par les tirants 60 et la vis de maintien 45.

Après le transport et éventuellement le stockage du module de turbine, équilibré dans son dispositif de transport, et que l'on désire mettre en place sur le moteur, on démonte la partie avant 57 du dispositif de transport par dévissage des boulons 61 maintenant les tirants de transport 60 et désolidarisation du bord 58 et de la bride 3 du carter 2 du distributeur.

On présente le module de turbine au-dessus du moteur (figure 7), les tirants 10 restés sur l'arbre de transmission 9 s'engagent dans les trous de fixation des disques 7 et 8 et guident l'ensemble en position. On fixe la bride 3 du carter 2 avec celle de la chambre 1. On monte les écrous 62 sur les tirants 10 puis on dépose la partie arrière 51 du dispositif de transport par démontage des boulons 54 fixant la cheminée 52 sur la bague de centrage 49 de la vis de maintien 45 et on désolidarise la bride 53 du dispositif de transport d'avec la bride 4 du module de turbine.

Les opérations de démontage d'un module de turbine d'un moteur peuvent être faites en utilisant le même appareillage, la séquence des opérations étant inversée.

L'appareillage pour le transfert d'un module de turbine selon l'invention comprend:
- un dispositif de maintien assurant le maintien du carter extérieur 2 du distributeur et de l'étage statorique sur la machine d'équilibrage lors de l'équilibrage du rotor de turbine;
- des moyens de solidarisation provisoire des disques de turbine ;
- un dispositif de transport assurant la solidarisation des disques de turbine après le retrait de la machine d'équilibrage.

**Revendications**

1. Combinaison d'un appareillage et d'un module de turbine complet permettant le transfert dudit module de turbine d'une machine d'équilibrage à un moteur et vice versa, le module comportant un carter extérieur du distributeur dans lequel est maintenu l'étage statorique et un rotor de turbine constitué de disques portant les aubages, les disques étant susceptibles d'être fixés à l'arbre de transmission du moteur par des tirants circonférentiels, le rotor étant muni à l'arrière d'un tourillon (11) portant un palier de fixation, caractérisée en ce qu'elle comprend:
- un dispositif de maintien (27) du carter extérieur du distributeur (2) du module et de l'étage statorique (16) sur la machine d'équilibrage lors de l'équilibrage du rotor de turbine (34),
- des moyens de solidarisation provisoire (26, 45) des disques (7, 8) de turbine entre eux,
- un dispositif de transport (51, 57) assurant la solidarisation des disques de turbine (7, 8) après le retrait de la machine d'équilibrage.

2. Combinaison d'un appareillage et d'un module de turbine selon la revendication 1, caractérisée en ce que le dispositif de maintien (27) est constitué d'une partie avant (30) formant un carter à fond conique portant dans son axe un palier (33) fixé sur l'arbre (29) de la machine d'équilibrage, le bord du carter portant une bride (32) pour la fixation d'une bride avant (3) du carter extérieur du distributeur (2) du module, et d'une partie arrière (36) portant intérieurement une partie cylindrique (37) ayant le même axe et coopérant avec le palier (12) resté sur le tourillon (11) et sur son bord externe une bride (38) susceptible de se fixer sur la bride arrière du module de turbine.

3. Combinaison d'un appareillage et d'un module de turbine selon la revendication 1 ou 2, caractérisée en ce que les moyens de solidarisation provisoire sont constitués par une vis de maintien (45) placée à l'intérieur du tube intérieur (6), constituée d'un corps tubulaire (46) portant d'une part, à son extrémité avant, et sur sa surface externe, un filetage (47) susceptible de coopérer avec un filetage (26) ménagé sur le bord intérieur (21) d'un anneau (19) dont le bord extérieur (20) est rendu solidaire du rotor de turbine et, d'autre part, à son extrémité arrière, une tête (48,49) susceptible de coopérer avec l'extrémité du tourillon (11).

4. Combinaison d'un appareillage et d'un module de turbine selon la revendication 3, caractérisée en ce que la tête (48, 49) de la vis de maintien est formée d'une collerette de butée (48) et d'une bague de centrage (49) portant contre la collerette et coopérant avec une portée interne (50) et l'extrémité du tourillon (11).

5. Combinaison d'un appareillage et d'un module de turbine selon l'une des revendications 1 à 4, caractérisé en ce que le dispositif de transport (51, 57) est constitué d'une partie avant (57) formée d'un fond annulaire tronconique comportant un bord extérieur (58) susceptible de se fixer sur la bride avant (3) du carter extérieur du distributeur (2) et un bord intérieur (59) susceptible de se fixer sur le rotor de turbine par des tirants de transport (60) maintenant les disques (7, 8) de rotor et d'une partie arrière (51) constituée d'une flasque circulaire à rebord comportant une ouverture centrale dans laquelle est fixée une cheminée (52) coaxiale dirigée en sens inverse du rebord, une bride (53) étant prévue sur son rebord extérieur pour permettre sa fixation à la bride arrière (4) du module.

6. Procédé pour la mise en oeuvre de la combinaison d'un appareillage et d'un module de turbine pour le transfert dudit module de turbine complet selon l'une des revendications précédentes caractérisé en ce qu'il comporte les phases suivantes:

I. Equilibrage du rotor de turbine dans le module comportant

a) fixation de l'avant du carter extérieur (2) du distributeur sur la partie avant (30) du dispositif de maintien (27),

b) fixation du rotor (34) de turbine sur l'arbre (29) de la machine d'équilibrage par les tirants (35) de l'arbre (29),

c) fixation de la partie arrière (36) du dispositif de maintien (27) sur l'arrière du carter extérieur (2) du distributeur, la partie cylindrique (37) de l'arrière (36) du dispositif de maintien (27) coopérant avec le palier (12) demeuré sur le tourillon (11),

d) équilibrage du rotor.

II. Transport du module de turbine, le rotor étant équilibré:

a) retrait de l'ensemble arbre (29) - dispositif de maintien (27) - module de turbine de la machine d'équilibrage et mise en position verticale dans un béti de démontage (43),

b) mise en place de la vis de maintien (45),

c) dévissage des écrous (40) des tirants (35) de l'arbre (29) de la machine d'équilibrage,

d) dépose de la partie arrière (36) du dispositif de maintien (27),

e) mise en place de la partie arrière (51) du dispositif de transport,

f) désaccouplage du carter (2) du distributeur et de la partie avant (30) du dispositif de maintien, la partie avant (30) et les tirants (35) restant en place sur l'arbre (29) de la machine d'équilibrage,

g) mise en place de la partie avant (57) du dispositif de transport fixée à l'aide de tirants de transport (60) maintenant les disques (7, 8).

III. Mise en place du module de turbine sur le moteur comportant:

a) dépose des tirants de transport (60) et de la partie avant (57) du dispositif de transport,

b) présentation du module sur le moteur, les tirants (10) de fixation, restés sur l'arbre de transmission (9), s'engageant dans les trous de fixation des disques (7, 8) et guidant l'ensemble en position,

c) fixation du carter (2) du distributeur du module sur le carter de chambre (1),

d) dépose de la partie arrière (51) du dispositif de transport.

**Patentansprüche**

1. Kombination aus einem Hilfsgerät und einem vollständigen Turbinenmodul, die das Übertragen dieses Turbinenmoduls von einer Auswuchtmaschine zu einem Motor und umgekehrt ermöglicht, wobei das Turbinenmodul ein Außengehäuse für das Leitrad umfaßt, in dem die Statorstufe und eine aus die Beschaufelungen tragenden Scheiben bestehender Turbinenrotor gehalten sind, wobei die Scheiben mit Hilfe von Stäben an der Transmissionswelle des Motors fixierbar sind, und wobei der Turbinenrotor an seiner hinteren Seite einen Achszapfen (11) aufweist, der ein Fixierungslager trägt,
gekennzeichnet durch
eine Haltevorrichtung (27) zur Halterung des Außengehäuses des Leitrads (2) des Turbinenmoduls und der Statorstufe (16) an der Auswuchtmaschine während des Auswuchtens des Turbinenrotors (34),
Mittel (26, 45) zur provisorischen gegenseitigen Festlegung der Turbinenscheiben (7, 8)
sowie eine Transportvorrichtung (51, 57), die die Festlegung der Turbinenscheiben (7, 8) nach dem Abziehen aus der Auswuchtmaschine sicherstellt.

2. Kombination aus einem Hilfsgerät und einem Turbinenmodul nach Anspruch 1, dadurch gekennzeichnet, daß die Haltevorrichtung (27) aus folgenden Teilen besteht:
einem Vorderteil (30), das ein Gehäuse mit konischem Boden trägt, der in seiner Achse ein auf der Welle (29) der Auswuchtmaschine fixiertes Lager (33) trägt, wobei der Rand des Gehäuses einen Flansch (32) für die Befestigung eines Vorderflansches (3) des Außengehäuses des Leitrads (2) des Turbinenmoduls besitzt,
und einem hinteren Teil (36), das innen einen gleichachsig zu dem auf dem Achszapfen (11) verbleibenden Lager (12) angeordneten und mit diesem zusammenwirkenden zylindrischen Abschnitt (37) und an seinem Außenrand einen Flansch (38) trägt, der an dem hinteren Flansch des Turbinenmoduls fixierbar ist.

3. Kombination aus einem Hilfsgerät und einem Turbinenmodul nach Anspruch 1 oder 2, dadurch gekennzeichnet, daß die Mittel zur provisorischen Festlegung von einer im Innern das Innenrohrs (6) angeordneten Halteschraube (45) gebildet sind, die aus einem rohrförmigen Körper (46) besteht, der einerseits an seinem vorderen Ende auf seiner Außenfläche ein Gewinde (47) trägt, das mit einem Gewinde (26) zusammenwirken kann, das an dem Innenrand (21) eines mit seinem Außenrand (20) fest mit dem Turbinenrotor verbundenen Ring (19) angebracht ist, und der (46) andererseits an seinem hinteren Ende einen Kopf (48, 49) trägt, der mit dem Endabschnitt des Achszapfens (11) zusammenwirken kann.

4. Kombination aus einem Hilfsgerät und einem Turbinenmodul nach Anspruch 3, dadurch gekennzeichnet, daß der Kopf (48, 49) der Halteschraube von einem Anschlagkragen (48) und einem an diesem anliegenden Zentrierungsring (49) gebildet ist, der mit einer inneren Auflagefläche (50) und dem Ende des Achszapfens (11) zusammenwirkt.

5. Kombination aus einem Hilfsgerät und einem Turbinenmodul nach Anspruch 1 bis 4, dadurch gekennzeichnet, daß die Transportvorrichtung (51, 57) aus folgenden Teilen besteht:

einem Vorderteil (57), das aus einem ringförmigen Boden in Form eines Kegelstumpfs gebildet ist, der einen an dem vorderen Flansch (3) des Außengehäuses des Leitrads (2) fixierbaren Außenrand (57) und einen Innenrand (59) aufweist, der auf dem Turbinenrotor mit Hilfe von Transportstäben (60) zur Halterung der Turbinenscheiben (7, 8) fixierbar ist,

sowie einem hinteren Teil (51), der aus einem mit einem abgewinkelten Rand versehenen Flanschteil gebildet ist, das eine zentrale Öffnung aufweist, in der ein in die zur Richtung des Randes entgegengesetzten Richtung weisendes koaxiales Rohr (52) befestigt ist, wobei auf dem Außenrand ein Flansch (53) angebracht ist, der die Befestigung an dem hinteren Flansch (4) des Turbinenmoduls ermöglicht.

6. Verfahren für den Einsatz der Kombination aus einem Hilfsgerät und einem vollständigen Turbinenmodul, die das Übertragen des Turbinenmoduls ermöglicht, nach den vorhergehenden Ansprüchen, gekennzeichnet durch folgende Phasen:

I. Auswuchten des Rotors in dem Turbinenmodul durch

a) Befestigen des vorderen Teils des Außengehäuses (2) des Leitrads an dem Vorderteil (30) der Haltevorrichtung (27),

b) Befestigen des Rotors (34) auf der Welle (29) der Auswuchtmaschine mittels der Stäbe (35) der Welle (29),

c) Befestigen des hinteren Teils (26) der Haltevorrichtung (27) an der hinteren Seite des Außengehäuses (2) des Leitrads, wobei der zylindrische Teil (37) des hinteren Teils (36) der Haltevorrichtung (27) mit dem auf dem Achszapfen (11) verbliebenen Lager (12) zusammenwirkt,

d) Auswuchten des Rotors,

II. Transport des Turbinenmoduls nach dem Auswuchten des Rotors durch

a) Herausziehen des aus Welle (29) und Haltevorrichtung (27) bestehenden Aggregats aus der Auswuchtmaschine und vertikales Ausrichten dieses Aggregat in einem Demontiergestell (43),

b) Anbringen des Halteschraube (45),

c) Herausschrauben der Muttern (40) der Stäbe (35) der Welle (29) der Auswuchtmaschine,

d) Abnehmen des hinteren Teils (36) der Haltevorrichtung (27),

e) Plazieren des hinteren Teils (51) der Transportvorrichtung,

f) Abkuppeln des Gehäuses (2) des Leitrads und des vorderen Teils (30) der Haltevorrichtung, wobei dieser vordere Teil (30) und die Stäbe (35) an der Welle (29) der Auswuchtmaschine verbleiben,

g) Plazieren des vorderen Teils (57) der Transportvorrichtung, das mit Hilfe von Transportstäben (60) fixiert ist, die die Scheiben (7, 8) halten,

III. Anbringen des Turbinenmoduls an dem Motor durch

a) Abnehmen der Transportstäbe (60) und der vorderen Teils (57) der Transportvorrichtung,

b) Präsentation des Turbinenmoduls an dem Motor, wobei die an der Übertragungswelle (9) verbliebenen Befestigungsstäbe (10) mit den Befestigungslöchern der Scheiben (7, 8) in Eingriff gebracht werden und das genannte Aggregat in seine Position führen

c) Befestigung des Gehäuses (2) des Leitrads des Turbinenmoduls an dem Kammergehäuse (1),

d) Abnehmen des hinteren Teils (51) der Transportvorrichtung.

**Claims**

1. Combination of an apparatus and of a complete turbine module enabling the transfer of the said turbine module from a balancing machine to an engine and <u>vice versa</u>, the module comprising an outer casing of the inlet guide vane assembly in which the stator stage is mounted and a turbine rotor comprising discs ccarrying blade arrays, the discs being capable of being secured to the transmission shaft of the engine by circumferential elongate bolts, the rotor being provided rearwardly with a rotary assembly (11) carrying a mounting bearing, characterized in that it comprises:

- a mounting assembly (27) of the outer casing of the inlet guide vane assembly (2) of the module and of the stator stage (16) on the balancing machine during the balancing of the turbine rotor (34),

- provisional connection means (26, 45) of the discs (7, 8) of the turbine between them,

- a transport arrangement (51, 57) enabling interconnection of the turbine discs (7, 8) after the withdrawal from the balancing machine.

2. Combination of an apparatus and of a turbine module according to claim 1, characterized in that the mounting assembly (27) comprises a front part (30) forming a casing with a conical base carrying on its shaft a bearing (33) fixed to the shaft (29) of the balancing machine, the edge of the casing having a flange (32) for the securing of a front flange (3) of the outer casing of the inlet guide vane assembly (2) of the module, and a rear part (36) carrying internally a cylindrical part (37) having the same axis and cooperating with the shaft (12) mounted on the rotary assembly (11) and on its outer edge a flange (38) capable of being secured to the rear flange of the turbine module.

3. Combination of an apparatus and of a turbine module according to claim 1 or 2, characterized in that the provisional connection means are in the form of a mounting bolt (45) located within the internal tube (6), constituted by a tubular body (46) having on the one hand, at its front end, and on the outer surface, a screw thread (47) arranged to cooperate with a screw thread (26) formed on the internal edge (21) of a ring (19) of which the outer edge (20) is connected with the rotor of the turbine and, on the other hand, at its rear end, a head (48, 49) arranged to cooperate with the end of the rotary assembly (11).

4. Combination of an apparatus and of a turbine module according to claim 3, characterized in that the head (48, 49) of the mounting bolt is formed with an abutment collar (48) and with a centering ring (49) abutting against the collar and cooperating with an internal seating (50) and the end of the rotary assembly (11).

5. Combination of an apparatus and of a turbine module according to one of claims 1 to 4, characterized in that the transport arrangement (51, 57) comprises a front part (57) formed from an annular frusto-conical base comprising an outer edge (58) capable of being secured to the front flange (3) of the outer casing of the inlet guide nozzle array (2) and an inner edge (59) arranged to be secured to the turbine rotor by elongate transport bolts (60) securing the discs (7, 8) of the rotor and a rear part (51) formed by a circular flange with a rim comprising a central opening in which is secured a coaxial cylindrical member (52) extending in the opposite sense to the rim, a flange (53) being provided on its outer rim in order to enable its securing to the rear flange (4) of the module.

6. Method for putting into practice the combination of an apparatus and of a turbine module for the transfer of the said complete turbine module according to the preceding claims characterized in that it comprises the following phases:

I Balancing of the turbine rotor in the module comprising

(a) securing of the external front part of the casing (2) of the inlet guide nozzle array on the front part (30) of the mounting assembly (27),

(b) securing of the rotor (34) of the turbine on to the shaft (29) of the balancing machine by the elongate bolts (35) of the shaft (29),

(c) securing of the rear part (36) of the mounting assembly (27) on to the rear of the outer casing (2) of the inlet guide vane assembly, the cylindrical part (37) of the rear (36) of the mounting arrangement (27) cooperating with the bearing (12) located on the rotary assembly (11),

(d) balancing of the rotor.

II Transport of the turbine module, the rotor being balanced:

(a) withdrawal of the shaft assembly (29) mounting assembly (27) - turbine module from the balancing machine and placing in a vertical position in a demounting stand (43),

(b) putting in place the mounting bolt (45),

(c) unscrewing of the nuts (40) of the mounting bolts (35) of the shaft (29) of the balancing machine,

(d) release of the rear part (36) of the mounting assembly (27),

(e) locating the rear part (51) of the transport device,

(f) un-coupling of the casing (2) of the inlet guide vane array and of the front part (30) of the mounting assembly, the front part (30) and the holding means (35) remaining in place on the shaft (29) of the balancing machine,

(g) locating the front part (57) of the transport device secured with the aid of transport elongate bolts (60) mounting the discs (7, 8).

III Locating the turbine module on the engine comprising:

(a) removal of the transport elongate bolts (60) and of the front part (57) of the transport device,

(b) offering up of the module to the engine, the securing elongate bolts (10), placed on the transmission shaft (9), engaging in securing holes of the discs (7, 8) and guiding the assembly into its position,

(c) securing of the casing (2) of the inlet guide vane array of the module on to the casing of the chamber (1),

(d) demounting of the rear part (51) of the transport device.

FIG.:1

FIG.:2

0 125 935

FIG.:3

FIG.: 4

FIG.: 5

0 125 935

FIG.:6

FIG.: 7

FIG.: 8